# EUROPEAN PATENT APPLICATION

(11) **EP 4 418 418 A1**
(43) Date of publication of application: **21.08.2024**
(21) Application number: 23156677.9
(22) Date of filing: 15.02.2023
(51) Int. Cl.: H01M 50/204, H01M 50/249

(54) **ADHESIVELY BONDED ASSEMBLY FOR BATTERY HOLDER, AND BATTERY HOLDER FOR TRANSPORT VEHICLE**

(71) Applicant: Constellium Singen GmbH, 78224 Singen (DE); Constellium UK Limited, Burnham, SL1 8DF (GB)
(72) Inventor: SCHAEFER, Simon, COVENTRY, CV61PZ (GB); BEN TAHAR, Mehdi, 38000 GRENOBLE (FR); YERBURY, James, COVENTRY, CV36QG (GB)
(74) Representative: Constellium - Propriété Industrielle

(57) **Abstract**

The invention concerns an assembly (1) for battery holder comprising a first structural element (10), a second structural element (20), an interior junction organ (30), an exterior junction organ (40), and adhesive agents (50); the interior junction organ (30) and the exterior junction organ (40) securing the first structural element (10) with the second structural element (20) via the adhesive agents (50) at the level of a first end portion (11) of the first structural element (10) and at the level of a second end portion (21) of the second structural element (20).

## Description

### TECHNICAL FIELD OF THE INVENTION

This invention relates to the field of electric or hybrid motorized transport vehicle, and more particularly to a battery holder intended to receive all or part of a battery to be supported by the battery holder.

More particularly, the invention relates to an assembly for such a battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of side impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types, which can determine the geometry, the size, the range as well as the vulnerability of the energy storage system. Consequently, the selected type of cell will influence the final design and shape of the battery enclosures.

A first main feature that a battery enclosure should have is that it needs to be sufficiently robust to reduce the chances of deforming when the vehicle is involved in a miss-use situation or in an accident. For this reason, the battery enclosure must have sufficient strength in order to reduce the chances of damaging internals of the enclosure, which could eventually cause serious damage to the vehicle and its surroundings.

A second primordial feature a battery enclosure must have is that it must meet standards that are mandatory, such as leak tightness. That is to say that no water or any other debris must penetrate the battery enclosure. A key parameter allowing meeting this requirement is to ensure a battery enclosure showing good flatness, especially to seal the lid on top of the above structure of the battery enclosure or the bottom floor to the bottom of the above structure. However, when assembling the frame parts constituting the frame, it is needed to use welding to secure the frame parts with each other. Welding can generate distortion in the frame structure and induce irregularities in the flatness of the frame. To overcome such distortion, a machining operation could be needed; which add significant cost and additional weight.

Finally, an important technical feature that a battery enclosure should have is a lightweight, to reduce the overall energy consumption of the vehicle and its cost.

To reduce the weight of the frame, it is known to use hollow profiles. In order to minimize the manufacturing cost of hollow profiles, they are generally extruded. Cast can also be considered when complex frame shape has to be designed. In other cases, a combination of casts and hollow extrusion can be considered.

It is known from the state of the art to use dedicated organs that forms the nodes between two adjacent profiles. Document US20180186227A1 discloses a first type of node, which is bolted on one hand to the first profile and in the other hand to the second profile. Document DE102017117093A1 and DE102016121252B4 discloses another solution where the nodes are welded to the profiles. However, by using those techniques it is not apparent that they could both show a good mechanical resistance, along with a good leak tightness. Besides, using welding to secure profiles could raises distortion between the profiles, which could generate geometrical defect in the battery holder. Alternative joining methods by fastening the first profile to the second profile are known from the state of the art. However, those techniques require to provision for additional feature in the design of the profile to host the threaded hole. Such feature will be present along the whole length of the profile one or two while being needed only for the extremities. Such approach leads to a weight and a cost penalty. This type of technical solutions is very well known in aluminum construction in building (e.g. doors, windows); however, it is not guaranteed that they will demonstrate sufficient strength.

### SUMMARY OF THE INVENTION

The present invention aim at solving the aforementioned problems. To this end, the invention concerns an assembly for battery holder comprising:
- a first structural element extending in a first direction and comprising externally:
   ∘ a first interior adhesion face; and
   ∘ a first exterior adhesion face arranged on a side opposite to the first interior adhesion face with respect to the first structural element;
- a second structural element extending in a second direction distinct from the first direction and comprising externally:
   ∘ a second interior adhesion face; and
   ∘ a second exterior adhesion face arranged on a side opposite to the second interior adhesion face with respect to the second structural element;
- an interior junction organ comprising a first interior junction face facing the first interior adhesion face of the first structural element, and a second interior junction face facing the second interior adhesion face of the second structural element;
- an exterior junction organ comprising a first exterior junction face facing the first exterior adhesion face of the first structural element and a second exterior junction face facing the second exterior adhesion face of the second structural element;
- adhesive agents interposed between the first interior junction face of the interior junction organ and the first interior adhesion face of the first structural element, between the second interior junction face of the interior junction organ and the second interior adhesion face of the second structural element, between the first exterior junction face of the exterior junction organ and the first exterior adhesion face of the first structural element, and between the second exterior junction face of the exterior junction organ and the second exterior adhesion face of the second structural element, said adhesive agents being configured to adhere the faces between which they are interposed;
the interior junction organ and the exterior junction organ securing the first structural element with the second structural element via the adhesive agents at the level of a first end portion of the first structural element and at the level of a second end portion of the second structural element.

The arrangements described above make it possible to provide an assembly for battery holder wherein the interior junction organ, and the exterior junction organ allows both to secure the first structural element with the second structural element when forming a corner, or any angle of the battery holder. Besides, the presence of the adhesive agents allows maintaining the assembly to form said corner, or angle of the battery holder without creating a distortion when securing the assembly. In other words, it is possible to sandwich the first structural element and the second structural element between the interior junction organ and the exterior junction organ.

It is well understood that the terms "first" and "second" are used to distinguish the elements relating to the first structural element and to the second structural element, and that the invention can be implemented similarly if the first structural element is inverted with the second structural element. Thus, any reference to a "second" element concerning the second structural element does not necessarily imply the presence of a "first" element for the second structural element.

According to an embodiment, the assembly comprises one or more of the following features, taken alone or in combination.

According to one embodiment, the first direction is sensibly perpendicular to the second direction. However, the first direction can form an angle with the second direction, said angle being strictly comprised between 0° and 360°, and different from 180°.

According to one embodiment, the first interior adhesion face is sensibly parallel to the first exterior adhesion face, and/or the second interior adhesion face is sensibly parallel to the second exterior adhesion face.

According to one embodiment, the interior junction organ, and the exterior junction organ are securing the first structural element with the second structural element by pinching.

According to one embodiment, the assembly comprises at least one clamping member configured to clamp the interior junction organ with the exterior junction organ, by bringing the interior junction organ closer to the exterior junction organ.

Thus, the clamping member allows reinforcing the total mechanic strength of the assembly.

According to one embodiment, the interior junction organ comprises an interior clamping hole and the exterior junction organ comprises an exterior clamping hole, the clamping member comprising a fixing rod configured to be screwed into at least one of said interior clamping hole and said exterior clamping hole, the clamping member comprises further a bearing head configured to lean directly or indirectly on one of the interior junction organ and the exterior junction organ, so as to provoke the pinching of the first structural element and the second structural element between the exterior junction organ and the interior junction organ.

For example, the bearing head is configured to lean on one of the interior junction organ and the exterior junction organ directly or via a washer.

According to one embodiment, at least one clamping hole chosen between the interior clamping hole and the exterior clamping hole is a threaded hole, and the clamping member is a screw or a bolt adapted to be screwed in said at least one clamping hole. Advantageously, the clamping member allows to increase the mechanical strength of the assembly, and to facilitate assembling the battery holder before tighten every element of the battery holder with each other.

By this way, it is possible to clamp the first structural element with the second structural element without drilling the first structural element and the second structural element.

According to one embodiment, the assembly comprises at least two clamping members.

Generally, one hole chosen between the interior clamping hole and the exterior clamping hole is a blind hole. Thus, it is possible to secure the first structural element with the second structural element while guaranteeing the fluid tightness of the assembly. It is advantageous that the interior clamping hole is a blind hole, since it allows placing the clamping member externally to the housing of the battery holder, to save space inside said housing.

If the interior clamping hole and the exterior clamping hole are through hole, it is possible to add a sealing component, or a fluid proof screwing system to guaranty fluid tightness.

According to one embodiment, the interior junction organ comprises a supporting element protruding towards the exterior junction organ, and configured to abut on the exterior junction organ when the exterior junction organ is clamped with the interior junction organ.

Advantageously, the supporting element comprises a proximal end in solidarity with an interior main body of the interior junction organ; and a distal end, opposite to the proximal end, and configured to abut on the exterior junction organ, the supporting element presenting further a length counted between the proximal end and the distal end. Advantageously, the supporting element allows increasing the mechanical strength of the assembly. Besides, the length of the supporting element can be chosen to define a gap between the interior junction organ and the exterior junction organ, said gap being adapted to a dimension of the first structural element, and/or a dimension of the second structural element.

According to one embodiment, part of the interior junction organ, and/or part of the exterior junction organ is disposed between the first end portion of the first structural element and the second end portion of the second structural element.

According to one embodiment, the interior junction organ comprises an interior shoulder configured to abut on the second end portion.

According to one embodiment, the interior junction organ comprises an interior shoulder configured to abut on the first end portion.

According to one embodiment, the exterior junction organ comprises an exterior shoulder configured to abut on the second end portion.

According to one embodiment, the exterior junction organ comprises an exterior shoulder configured to abut on the first end portion.

According to one embodiment, at least one element chosen among an exterior shoulder, an interior shoulder, and a supporting element, is disposed between the first end portion and the second end portion. By this way, it is possible to form an assembly, while avoiding to put the first structural element in contact with the second structural element.

According to one embodiment, the first structural element, the second structural element and the interior junction organ, comprises respectively a first height, a second height and an interior height that are counted along a transversal direction defined perpendicular to the plane formed by the first direction and the second direction, the first height being sensibly equal to the second height and the interior height.

Thus, it is possible to provide an assembly for battery holder where a floor and a lid can be easily fixed to close an enclosure of the battery holder.

By "sensibly equal", we mean "more or less 3%".

According to one embodiment, each adhesive agent extends continuously over each one of the whole first height, the whole second eight, the whole interior height, and the whole exterior height.

By this way, it is possible to ensure a tightness of the assembly, said tightness being guaranteed by the adhesive agent.

According to one embodiment, at least one of the interior junction organ and the exterior junction organ comprises a metallic material, for example aluminum.

According to one embodiment, at least one of the interior junction organ and the exterior junction organ consist in a metallic material, for example aluminum. Thus, it is possible to manufacture the first structural element, the second structural element, the interior junction organ, and the exterior junction organ in one type of material, for example by extrusion of aluminum. Extrusion is a cost effective solution to manufacture aluminum components.

According to one embodiment, at least one of the interior junction organ and the exterior junction organ comprises a polymeric material.

Thus, it is possible to manufacture the interior junction organ and the exterior junction organ more easily. Besides, when a clamping hole is drilled inside the interior junction organ and/or inside the exterior junction organ, the drilling step is easier.

According to one embodiment, at least one structural element of the first structural element and the second structural element is an extruded profile extruded along an extrusion direction.

Thus, it is possible to manufacture the first structural element and/or the second structural element at a large scale with reduced costs.

According to one embodiment, the first structural element is a profile, for example and extruded profile along the first direction.

According to one embodiment, the second structural element is a profile, for example and extruded profile along the second direction.

By "profile" we mean a structural element, which extends along a direction, said structural element can be manufactured by molding, stamping, roll forming, extrusion, or any other manufacturing method. In case the profile comprises polymeric material, said profile can be manufactured by injection.

According to one embodiment, the extruded profile has a cutting section, perpendicular to the extrusion direction, which is constant along the extrusion direction.

According to one embodiment, at least one structural element chosen between the first structural element and the second structural element delimits internally a cavity extending along all or part of said at least one structural element in the direction along which said at least one structural element extends.

As a result, the overall weight of the profile is reduced while the mechanical strength of the profile remains sufficient to support the battery.

According to one embodiment, at least one junction organ chosen between the interior junction organ and the exterior junction organ is a solid organ showing fluid tightness.

According to one embodiment, the exterior junction organ comprises an exterior main body comprising the first exterior junction face and the second exterior junction face; and at least one exterior flange extending sensibly perpendicularly to the exterior main body, on the opposite direction to the interior junction organ with respect with the exterior main body. For example, the at least one exterior flange extends in a plane parallel to, or coincident with the plane formed by the first direction and the second direction.

According to one embodiment, the interior junction organ comprises at least one interior flange extending in a plane parallel to, or coincident with the plane formed by the first direction and the second direction.

For example, the at least one interior flange extends from the main body of the interior junction organ.

According to one embodiment, the interior junction organ is configured to receive a sealant configured to seal the bottom and/or the lid of the battery holder to the first structural element, and to the second structural element. For example, the sealant can be received at the level of the at least one interior flange. Thus, deposition of the sealant is facilitated.

According to one embodiment, the interior junction organ comprises two interior flanges arranged at two opposite ends of the interior junction organ. Thus, it is possible to place the sealant at the lid side, and at the floor side.

According to one embodiment, the two flanges are disposed at opposite end portions of the interior junction organ with respect with an axis viewed perpendicular to the plane formed by the first direction and the second direction.

The object of the invention may also be achieved by implementing a battery holder for a transport vehicle, the battery holder comprising a frame and a floor delimiting between them a housing intended to receive all or part of a battery, said frame comprising at least one assembly as previously described.

It is well understood that the at least one assembly may form the corners of the frame of the battery holder.

According to an embodiment, the exterior junction organ is arranged on the side opposite to the housing with respect to the first structural element and the second structural element, and the interior junction organ is arranged on the side of the housing with respect to the first structural element and the second structural element.

The object of the invention may also be achieved by implementing an electric or hybrid motorized transport vehicle comprising a battery holder as previously described.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically a perspective view of an assembly according to one embodiment of the invention.
Figure 2 represents schematically a sectional view of an assembly according to one embodiment of the invention.
Figure 3 represents schematically a perspective view of an assembly according to one embodiment of the invention.
Figure 4 represents schematically a perspective view of an assembly according to one embodiment of the invention.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

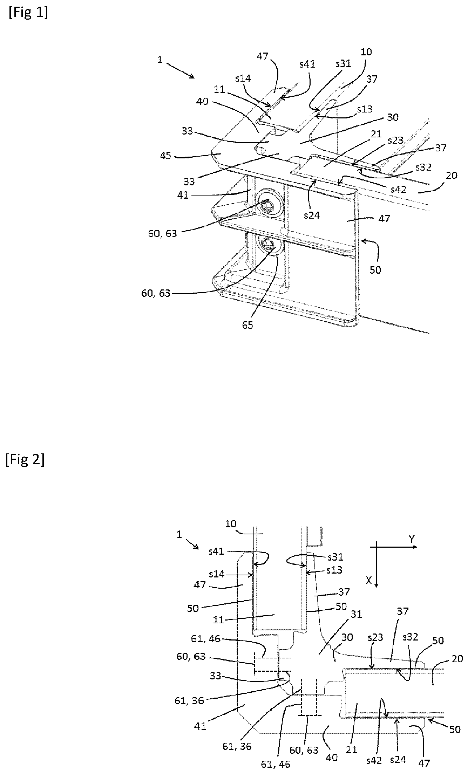

As illustrated on figure 1 to 4, the invention concerns an assembly 1 for battery holder, and concerns a battery holder included in a transport vehicle. For example, the transport vehicle may be an electric or hybrid motorized transport vehicle. The battery holder comprises a frame and a floor delimiting between them a housing intended to receive all or part of a battery, said frame comprising at least one assembly 1 of the type described below. For example, the at least one assembly 1 may form one or several corners, or angles of the frame of the battery holder.

The assembly 1 comprises a first structural element 10 extending in a first direction noted "X", a second structural element 20 extending in a second direction noted "Y" distinct from the first direction X, an interior junction organ 30, an exterior junction organ 40, and adhesive agents 50.

It is well understood that the terms "first" and "second" are used to distinguish the elements relating to the first structural element 10 and to the second structural element 20, and that the invention can be implemented similarly if the first structural element 10 is inverted with the second structural element 20. Thus, any reference to a "second" element concerning the second structural element 20 does not necessarily imply the presence of a "first" element for the second structural element 20. As illustrated on the non-limitative variant represented on figures 1 to 4, the first direction X is sensibly perpendicular to the second direction Y. However, the first direction X can form an angle with the second direction Y, said angle being strictly comprised between 20° and 340°, and different from 180°.

The interior junction organ 30 and the exterior junction organ 40 secure the first structural element 10 with the second structural element 20 via the adhesive agents 50 at the level of a first end portion 11 of the first structural element 10 and at the level of a second end portion 21 of the second structural element 20. For example, the interior junction organ 30, and the exterior junction organ 40 are securing the first structural element 10 with the second structural element 20 by pinching.

The first structural element 10 comprises externally a first interior adhesion face s13 and a first exterior adhesion face s14 arranged on a side opposite to the first interior adhesion face s13 with respect to the first structural element 10. For example, the first interior adhesion face s13 is sensibly parallel to the first exterior adhesion face s14.

The second structural element 20 comprises externally a second interior adhesion face s23 and a second exterior adhesion face s24 arranged on a side opposite to the second interior adhesion face s23 with respect to the second structural element 20. For example, the second interior adhesion face s23 is sensibly parallel to the second exterior adhesion face s24.

Advantageously, at least one structural element chosen between the first structural element 10 and the second structural element 20, is an extruded profile extruded along an extrusion direction. Thus, the first structural element 10 may be extruded along the first direction X, and the second structural element 20 can be extruded along the second direction Y. By this way, it is possible to manufacture the first structural element 10 and/or the second structural element 20 at a large scale with reduced costs. By "profile" we mean a structural element, which extends along a direction, said structural element can be manufactured by molding, stamping, roll forming, extrusion, or any other manufacturing method. In case the profile comprises polymeric material, said profile can be manufactured by injection. As illustrated on the figure, the first structural element 10 and the second structural element 20 are similar profiles, but they can be different profiles as well. Besides, it is possible that the extruded profiles have a cutting section, perpendicular to the extrusion direction, which is constant along the extrusion direction. In order to reduce the overall weight of the profile, while maintaining the mechanical strength of the profile sufficient to support the battery, it is advantageous that at least one structural element chosen between the first structural element 10 and the second structural element 20 delimits internally a cavity extending along all or part of said at least one structural element in the direction along which said at least one structural element extends.

The interior junction organ 30 comprises a first interior junction face s31 facing the first interior adhesion face s13 of the first structural element 10, and a second interior junction face s32 facing the second interior adhesion face s23 of the second structural element 20. Generally, the interior junction organ 30 is a solid piece showing fluid tightness. The interior junction organ 30 can be arranged towards the housing of the battery holder with respect to the first structural element 10 and the second structural element 20.

The interior junction organ 30 may comprise an interior main body 31, which can be disposed between the first structural element 10 and the second structural element 20. The interior main body 31 can be provided with one or several interior shoulders 39. Said interior shoulders 39 can be configured to allow the first structural element 10 to abut on the interior junction organ 30 along the first direction X, and to allow the second structural element 20 to abut on the interior junction organ 30 along the second direction Y.

The interior main body 31 may include interior walls 37, extending from the interior main body 31 along the first direction X and/or along the second direction Y. In this case, one of the interior wall 37 may comprise the first interior junction face s31, and another interior wall 37 may comprise the second interior junction face s32. In other words, the interior junction organ 30 may have a general V shape.

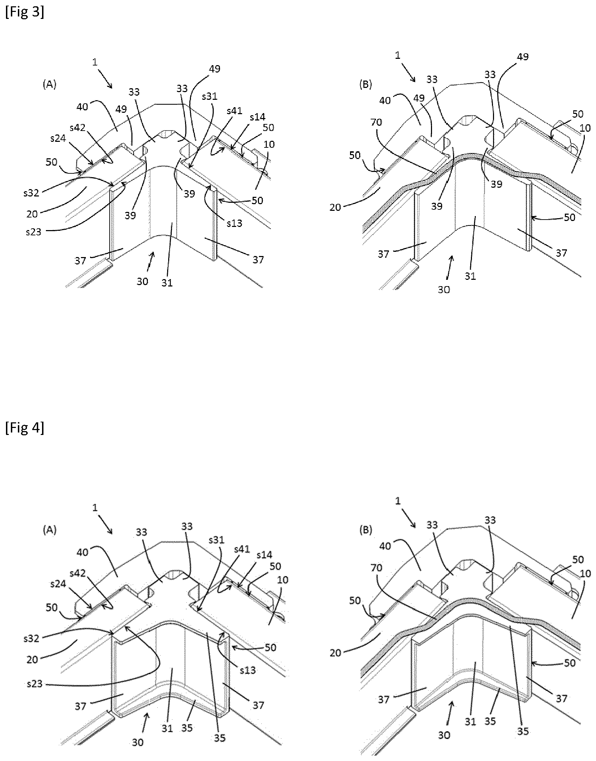

According to one embodiment, the interior junction organ 30 can be configured to receive a sealant 70 configured to seal the bottom and/or the lid of the battery holder to the first structural element 10, and to the second structural element 20. Figures 3 A and 4 A illustrate the assembly 1 before adjunction of the sealant 70, and figures 3 B and 4 B illustrate the assembly 1 when the sealant 70 is disposed on the first structural element 10, the interior junction organ 30, and the second structural element 20.

The interior junction organ 30 may also include at least one supporting element 33 protruding towards the exterior junction organ 40, and configured to abut on the exterior junction organ 40 when the exterior junction organ 40 is clamped with the interior junction organ 30. For example, the supporting element 33 comprises a proximal end in solidarity with the interior main body 31 of the interior junction organ 30; and a distal end, opposite to the proximal end, and configured to abut on the exterior junction organ 40. Advantageously, the supporting element 33 allows increasing the mechanical strength of the assembly 1. Figures 1 and 2 represent a variant where the interior junction organ 30 comprises two identical supporting elements 33, and figures 3 and 4 represent other variants where the interior junction organ 30 comprises two dissymmetrical supporting elements 33. However, the number and the shape of the supporting elements 33 are not limited to. The supporting element 33 may present a length counted between the proximal end and the distal end that can be chosen to define a gap between the interior junction organ 30 and the exterior junction organ 40, said gap being adapted to a dimension of the first structural element 10, and/or a dimension of the second structural element 20.

On the variant represented on figure 4, the interior junction organ 30 comprises at least one interior flange 35 extending in a plane parallel to, or coincident with the plane formed by the first direction X and the second direction Y. Advantageously, when the interior junction organ 30 is configured to receive the sealant 70, said sealant 70 can be received at the level of the at least one interior flange 35. Thus, deposition of the sealant 70 is facilitated. Figure 4 illustrates notably that the interior junction organ 30 comprises two interior flanges 35 arranged at two opposite ends of the interior junction organ 30. Thus, it is possible to place the sealant 70 at the lid side, and at the floor side.

The exterior junction organ 40 comprises a first exterior junction face s41 facing the first exterior adhesion face s14 of the first structural element 10 and a second exterior junction face s42 facing the second exterior adhesion face s24 of the second structural element 20. Generally, the exterior junction organ 40 is a solid organ showing fluid tightness. The exterior junction organ 40 is generally arranged on the side opposite to the housing with respect to the first structural element 10 and the second structural element 20.

The exterior junction organ 40 may comprise an exterior main body 41, which can be disposed between the first structural element 10 and the second structural element 20. The exterior main body 41 can be provided with one or several exterior shoulders 49. Said exterior shoulders 49 can be configured to allow the first structural element 10 to abut on the exterior junction organ 40 along the first direction X, and to allow the second structural element 20 to abut on the exterior junction organ 40 along the second direction Y.

The exterior main body 41 may include exterior walls 47, extending from the exterior main body 41 along the first direction X and/or along the second direction Y. In that case, one of the exterior wall 47 may comprise the first exterior junction face s41, and another exterior wall 47 may comprise the second exterior junction face s42. In other words, the exterior junction organ 40 may have a general V shape.

The exterior main body 41 may further comprise at least one exterior flange 45 extending sensibly perpendicularly to the exterior main body 41, on the opposite direction to the interior junction organ 30 with respect with the exterior main body 41.

According to one embodiment, at least one of the interior junction organ 30 and the exterior junction organ 40 comprises a metallic material, for example aluminum. More particularly, at least one of the interior junction organ 30 and the exterior junction organ 40 consist in a metallic material, for example aluminum. Thus, it is possible to manufacture the first structural element 10, the second structural element 20, the interior junction organ 30, and the exterior junction organ 40 in one type of material, for example by extrusion of aluminum. Extrusion is a cost effective solution to manufacture aluminum components. Alternatively, at least one of the interior junction organ 30 and the exterior junction organ 40 comprises a polymeric material. Thus, it is possible to manufacture the interior junction organ 30 and the exterior junction organ 40 more easily. Besides, when a clamping hole is drilled inside the interior junction organ 30 and/or inside the exterior junction organ 40, the drilling step is easier.

The adhesive agents 50 are interposed between the first interior junction face s31 of the interior junction organ 30 and the first interior adhesion face s13 of the first structural element 10, between the second interior junction face s32 of the interior junction organ 30 and the second interior adhesion face s23 of the second structural element 20, between the first exterior junction face s41 of the exterior junction organ 40 and the first exterior adhesion face s14 of the first structural element 10, and between the second exterior junction face s42 of the exterior junction organ 40 and the second exterior adhesion face s24 of the second structural element 20. The adhesive agents 50 are configured to adhere the faces between which they are interposed.

Advantageously, the first structural element 10, the second structural element 20 and the interior junction organ 30, comprises respectively a first height, a second height and an interior height that are counted along a transversal direction defined perpendicular to the plane formed by the first direction X and the second direction Y, the first height being sensibly equal to the second height and the interior height. Thus, it is possible to provide an assembly 1 for battery holder where a floor and a lid can be easily fixed to close an enclosure of the battery holder. By "sensibly equal", we mean "more or less 3%". In that case, it is advantageous that each adhesive agent 50 extends continuously over each one of the whole first height, the whole second eight, the whole interior height, and the whole exterior height. Thus, it is possible to ensure a tightness of the assembly 1, said tightness being guaranteed at least by the adhesive agent 50.

As shown on figure 1 and 2, the assembly 1 may comprise at least one clamping member 60 configured to clamp the interior junction organ 30 with the exterior junction organ 40, by bringing the interior junction organ 30 closer to the exterior junction organ 40. The clamping member 60 allows reinforcing the total mechanic strength of the assembly 1. Figures 1 and 2 illustrates a variant where the assembly 1 comprises four clamping members 60.

For example, each clamping member 60 can comprise a fixing rod 61 and a bearing head 63 configured to lean directly or indirectly on one of the interior junction organ 30 and the exterior junction organ 40. The interior junction organ 30 may be provided with an interior clamping hole 36 and the exterior junction organ 40 may be provided with an exterior clamping hole 46 to allow the fixing rod 61 to be screwed into at least one of said interior clamping hole 36 and said exterior clamping hole 46. Synergistically, when the interior junction organ 30 comprises supporting elements 33, the interior clamping hole 36 can be housed along the length of the supporting element 33, and continuously with the exterior clamping hole 46. By this way, it is possible to increase the quantity of matter surrounding the interior clamping hole 36, increasing by this way the strength of the clamping. The bearing head 63 may then be configured to provoke the pinching of the first structural element 10 and the second structural element 20 between the exterior junction organ 40 and the interior junction organ 30. For example, the bearing head 63 is configured to lean on one of the interior junction organ 30 and the exterior junction organ 40 directly or via a washer 65.

Advantageously, at least one clamping hole chosen between the interior clamping hole 36 and the exterior clamping hole 46 is a threaded hole, and the clamping member 60 is a screw or a bolt adapted to be screwed in said at least one clamping hole. Thus, the clamping member 60 allows to increase the mechanical strength of the assembly 1, and to facilitate assembling the battery holder before tighten every element of the battery holder with each other. It is by this way possible to clamp the first structural element 10 with the second structural element 20 without drilling the first structural element 10 and the second structural element 20.

Generally, one hole chosen between the interior clamping hole 36 and the exterior clamping hole 46 is a blind hole. Thus, it is possible to secure the first structural element 10 with the second structural element 20 while guaranteeing the fluid tightness of the assembly 1. It is advantageous that the interior clamping hole 36 is a blind hole, since it allows placing the clamping member 60 externally to the housing of the battery holder, to save space inside said housing. Alternatively, if the interior clamping hole 36 and the exterior clamping hole 46 are through hole, it is possible to add a sealing component, or a fluid proof screwing system to guaranty fluid tightness.

The arrangements described above make it possible to provide an assembly 1 for battery holder wherein the interior junction organ 30, and the exterior junction organ 40 allows both to secure the first structural element 10 with the second structural element 20 when forming a corner, or an angle of the battery holder. Besides, the presence of the adhesive agents 50 allows maintaining the assembly 1 to form said corner, or angle of the battery holder without creating a distortion when securing the assembly 1. In other words, it is possible to sandwich the first structural element 10 and the second structural element 20 between the interior junction organ 30 and the exterior junction organ 40.

## Claims

1. Assembly (1) for battery holder comprising:
- a first structural element (10) extending in a first direction (X) and comprising externally:
∘ a first interior adhesion face (s13); and
∘ a first exterior adhesion face (s14) arranged on a side opposite to the first interior adhesion face (s13) with respect to the first structural element (10);
- a second structural element (20) extending in a second direction (Y) distinct from the first direction (X) and comprising externally:
∘ a second interior adhesion face (s23); and
∘ a second exterior adhesion face (s24) arranged on a side opposite to the second interior adhesion face (s23) with respect to the second structural element (20);
- an interior junction organ (30) comprising a first interior junction face (s31) facing the first interior adhesion face (s13) of the first structural element (10), and a second interior junction face (s32) facing the second interior adhesion face (s23) of the second structural element (20);
- an exterior junction organ (40) comprising a first exterior junction face (s41) facing the first exterior adhesion face (s14) of the first structural element (10) and a second exterior junction face (s42) facing the second exterior adhesion face (s24) of the second structural element (20);
- adhesive agents (50) interposed between the first interior junction face (s31) of the interior junction organ (30) and the first interior adhesion face (s13) of the first structural element (10), between the second interior junction face (s32) of the interior junction organ (30) and the second interior adhesion face (s23) of the second structural element (20), between the first exterior junction face (s41) of the exterior junction organ (40) and the first exterior adhesion face (s14) of the first structural element (10), and between the second exterior junction face (s42) of the exterior junction organ (40) and the second exterior adhesion face (s24) of the second structural element (20), said adhesive agents (50) being configured to adhere the faces between which they are interposed;
the interior junction organ (30) and the exterior junction organ (40) securing the first structural element (10) with the second structural element (20) via the adhesive agents (50) at the level of a first end portion (11) of the first structural element (10) and at the level of a second end portion (21) of the second structural element (20).

2. Assembly (1) according to claim 1, wherein the first interior adhesion face (s13) is sensibly parallel to the first exterior adhesion face (s14), and/or wherein the second interior adhesion face (s23) is sensibly parallel to the second exterior adhesion face (s24).

3. Assembly (1) according to any one of claims 1 or 2, comprising at least one clamping member (60) configured to clamp the interior junction organ (30) with the exterior junction organ (40), by bringing the interior junction organ (30) closer to the exterior junction organ (40).

4. Assembly (1) according to claim 3, wherein the interior junction organ (30) comprises an interior clamping hole (36) and the exterior junction organ (40) comprises an exterior clamping hole (46), the clamping member (60) comprising a fixing rod (61) configured to be screwed into at least one of said interior clamping hole (36) and said exterior clamping hole (46), the clamping member (60) comprises further a bearing head (63) configured to lean directly or indirectly on one of the interior junction organ (30) and the exterior junction organ (40), so as to provoke the pinching of the first structural element (10) and the second structural element (20) between the exterior junction organ (40) and the interior junction organ (30).

5. Assembly (1) according to any one of claims 3 or 4, wherein the interior junction organ (30) comprises a supporting element (33) protruding towards the exterior junction organ (40), and configured to abut on the exterior junction organ (40) when the exterior junction organ (40) is clamped with the interior junction organ (30).

6. Assembly (1) according to any one of claims 1 to 5, wherein the first structural element (10), the second structural element (20) and the interior junction organ (30), comprises respectively a first height, a second height and an interior height that are counted along a transversal direction defined perpendicular to the plane formed by the first direction (X) and the second direction (Y), the first height being sensibly equal to the second height and the interior height.

7. Assembly (1) according to claim 6, wherein each adhesive agent (50) extends continuously over each one of the whole first height, the whole second eight, the whole interior height, and the whole exterior height.

8. Assembly (1) according to any one of claims 1 to 7, wherein at least one of the interior junction organ (30) and the exterior junction organ (40) comprises a metallic material, for example aluminum.

9. Assembly (1) according to any one of claims 1 to 8, wherein at least one structural element of the first structural element (10) and the second structural element (20) is an extruded profile extruded along an extrusion direction.

10. Assembly (1) according to any one of claims 1 to 9, wherein at least one junction organ chosen between the interior junction organ (30) and the exterior junction organ (40) is a solid organ showing fluid tightness.

11. Assembly (1) according to any one of claims 1 to 10, wherein the exterior junction organ (40) comprises an exterior main body (41) comprising the first exterior junction face (s41) and the second exterior junction face (s42) ; and at least one exterior flange (45) extending sensibly perpendicularly to the exterior main body (41), on the opposite direction to the interior junction organ (30) with respect with the exterior main body (41).

12. Assembly (1) according to any one of claims 1 to 11, wherein the interior junction organ (30) comprises at least one interior flange (35) extending in a plane parallel to, or coincident with the plane formed by the first direction (X) and the second direction (Y).

13. Battery holder for a transport vehicle, the battery holder comprising a frame and a floor delimiting between them a housing intended to receive all or part of a battery, said frame comprising at least one assembly (1) according to any one of claims 1 to 12.

14. Battery holder according to claim 13, wherein the exterior junction organ (40) is arranged on the side opposite to the housing with respect to the first structural element (10) and the second structural element (20), and the interior junction organ (30) is arranged on the side of the housing with respect to the first structural element (10) and the second structural element (20).

15. Electric or hybrid motorized transport vehicle comprising a battery holder according to any one of claims 13 or 14.
